# EUROPEAN PATENT APPLICATION

(11) **EP 4 850 851 A1**
(43) Date of publication of application: **09.12.2026**
(21) Application number: 25749182.9
(22) Date of filing: 03.02.2025
(51) Int. Cl.: B23K 35/26, B22F 1/00, B22F 9/00, B23K 35/22, C22C 13/00, C22C 13/02

(54) **SOLDER ALLOY, SOLDER PASTE, SOLDER BALL, SOLDER PREFORM, SOLDER JOINT, ON-VEHICLE ELECTRONIC CIRCUIT, ECU ELECTRONIC CIRCUIT, ON-VEHICLE ELECTRONIC CIRCUIT DEVICE, AND ECU ELECTRONIC CIRCUIT DEVICE**

(30) Priority: 04.02.2024 JP 2024015314
(71) Applicant: Senju Metal Industry Co., Ltd., Tokyo 120-8555 (JP)
(72) Inventor: IIJIMA Yuki, Tokyo 120-8555 (JP); YOKOYAMA Takahiro, Tokyo 120-8555 (JP)
(74) Representative: Zimmermann & Partner Patentanwälte mbB
(86) International application number: PCT/JP2025/003329
(87) International publication number: WO 2025/164805

(57) **Abstract**

Provided are a solder alloy, a solder paste, a solder ball, a solder preform, a solder joint, a vehicle-mounted electronic circuit, an ECU electronic circuit, a vehicle-mounted electronic circuit device, and an ECU electronic circuit device, each of which has a low melting point, high shear strength, and an appropriate fracture mode. A solder alloy has an alloy composition consisting of, by mass%, Ag: 2.0 to 3.6%, In: 1.0 to 5.0%, Sb: 3.0 to 5.0%, Fe: 0.001 to 0.030%, and Co: 0.0000% or more and 0.0500% or less, with the balance being Sn. Preferably, the alloy composition further contains, by mass%, at least one of Zr, Ge, Ga, P, As, Pb, Zn, Mg, Cr, Ti, Mo, Pt, Pd, Au, Al, and Si: 0.100% or less in total.

## Description

### Technical Field

The present invention relates to a solder alloy, a solder paste, a solder ball, a solder preform, a solder joint, a vehicle-mounted electronic circuit, an ECU electronic circuit, a vehicle-mounted electronic circuit device, and an ECU electronic circuit device.

### Background Art

A vehicle is mounted with an electronic circuit in which electronic components are soldered to a printed circuit board (hereinafter referred to as a "vehicle-mounted electronic circuit"). Vehicle-mounted electronic circuits are used in devices that electrically control an engine, a power steering, a brake, and the like, and are essential safety components for vehicle travel. In particular, a vehicle-mounted electronic circuit called an ECU (Engine Control Unit), which is an electronic circuit that controls a vehicle with a computer for improving fuel efficiency, needs to be capable of operating in a stable state without failure for a long period of time. Due to the expansion of the mounting region, such a vehicle-mounted electronic circuit has come to be mounted in places that receives various external loads such as impact and vibration.

Since the 1980s, among solder alloys considered for use in engine compartments, Sn-Ag based solder alloys, which are an alternative to Sn-Pb solder alloys, have been cited as an option. The Sn-Ag based solder alloy has conventionally been known as a highly versatile solder alloy, as evidenced by the fact that it has been assigned the JIS designation A35. However, the Sn-Ag solder alloy has been regarded as a basic position for replacing the Sn-Pb solder alloy as a lead-free solder alloy, and further studies have been conducted.

In addition, when the Sn-Ag solder alloy is connected to a Cu electrode, Cu hardly dissolves in Sn, so that Cu diffused from the electrode and Sn in the solder alloy form a coarse CuSn intermetallic compound layer at the joint interface. Moreover, there are various concerns that the solder alloy becomes brittle due to precipitation of a large amount of Ag₃Sn. Consequently, in the Sn-Ag solder alloy, a solder alloy in which a solder joint is not fractured even in a severe use environment is required, and various studies have been conducted heretofore.

Patent Document 1 studies an alloy composition in which Sb, Bi, In, Ag, and Ga are added to an Sn-Co solder alloy in order to improve the tensile strength of the solder alloy. The same document discloses a solder alloy that contains Co to disperse fine CoSn and CoSn₂ in a Sn matrix, thereby contributing to the improvement of tensile strength. In addition, it has been studied to further add an element such as Sb in order to lower the melting point.

Patent Document 2 discloses an Sn-Ag-Sb-Ni-Bi-Co solder alloy that suppresses generation of voids and also suppresses generation of cracks even after a heat cycle test. The same document describes that when Cu is not contained, the melt viscosity can be lowered, so that generation of voids can be suppressed. Moreover, the same document also discloses that when Ni is contained, excessive diffusion of Cu is suppressed even without containing Cu, so that the crack propagation is suppressed.

### Citation List

### Patent Document

Patent Document 1: Japanese Unexamined Patent Application Publication No. H06-344180 A
Patent Document 2: Japanese Unexamined Patent Application Publication No. 2018-1179 A

### Summary of Invention

### Technical Problem

As described above, in the inventions described in Patent Documents 1 and 2, the tensile strength of the solder alloy is improved, generation of voids is also suppressed, and heat cycle resistance is improved. In addition, in Patent Document 1, studies have been conducted to lower the melting point.

However, these evaluations alone are insufficient as a solder alloy used for a vehicle-mounted electronic circuit. For example, for a vehicle-mounted electronic circuit, when a vehicle on which the electronic circuit is mounted travels on a rough road, stress such as external impact or vibration is applied to the electronic circuit. Therefore, it is very important for a solder joint to exhibit high shear strength so that the solder joint does not fracture.

In addition, even if a solder joint that is less likely to fracture is formed, the solder joint eventually fractures when stress is continuously applied to the solder joint. It is conceivable that such continuous stress is constantly applied by being exposed to an environment with drastic temperature changes. This is due to the difference in thermal expansion coefficients of the electrode, the intermetallic compound formed at the joint interface, and the bulk. At this time, the fracture mode representing the fractured portion should not be the joint interface. Since the joint interface is joined to the electrode, it is not easy to relieve the stress at the joint interface. However, physical and electrical loads are mainly applied to the joint interface of the solder joint. Therefore, it is considered that the fracture can be suppressed by relieving the stress in the bulk that is relatively easily deformed.

However, Patent Documents 1 and 2 do not study shear strength and a fracture mode at all, and it is hard to say that actual conditions in use of solder joints are reflected. Since the solder joint electrically connects a board or the like to an electronic component or the like, fracture at the joint interface should be avoided as much as possible.

As described above, Patent Documents 1 and 2 do not study shear strength and a fracture mode at all, which are essential properties as a solder joint. A solder alloy that exhibits these properties even when the solder alloy does not contain Cu is desired. However, in recent years, electrification of vehicles has progressed, and it is considered that the number of boards to be mounted is increasing, so that it is urgent to develop a solder alloy exhibiting these properties. Moreover, in view of the heat resistance of the electronic components, it is also desired to exhibit a melting point similar to the conventional solder alloy.

Therefore, an object of the present invention is to provide a solder alloy, a solder paste, a solder ball, a solder preform, a solder joint, a vehicle-mounted electronic circuit, an ECU electronic circuit, a vehicle-mounted electronic circuit device, and an ECU electronic circuit device, each of which has a low melting point, high shear strength and an appropriate fracture mode.

### Solution to Problem

The present inventors have re-examined the solder alloys disclosed in Patent Documents 1 and 2. Among the solder alloys disclosed in both documents, the Sn-Ag-In-Sb-Co-Ga solder alloy of Example 5 in Patent Document 1, the Sn-Ag-In-Sb-Co-Ni-Bi solder alloy of Example 19 in Patent Document 2, and the Sn-Ag-Sb-Co-Fe-Ni-Bi solder alloy of Example 24 in the same document all have shear strength substantially the same as that of the conventional solder alloys, and it has been found that there is still room for improvement.

These solder alloys do not have an alloy composition designed for the purpose of improving shear strength. It should be understood that solder alloys are such that, for each solder alloy, when the content or the like of even one of the constituent components is different, the overall properties are generally different, and therefore the entire combination of alloy elements having predetermined contents is technically evaluated as an integrated whole.

Therefore, the present inventors conducted detailed studies on the improvement of the shear strength and the fracture mode while suppressing the increase in the melting point. Here, Patent Document 1 describes that the melting point can be lowered by adding Ag, In, Sb, and Ga to the Sn-Co solder alloy. However, since the melting point greatly varies depending on the contents of these elements, the composition described in Example 5 of Patent Document 1 is not always appropriate.

In addition, Patent Document 1 discloses that Co is added for the purpose of improving the tensile strength. However, the improvement of the shear strength has not been studied at all. In addition, when the tensile strength of the solder alloy is improved more than necessary, the fracture mode becomes the joint interface. Therefore, it is inferred that the addition of Co is not preferable in the Sn-Ag-In-Sb-Co-Ga solder alloy.

Patent Document 2 describes that generation of voids can be suppressed when the Ni and Co contents fall within a predetermined range. As described above, in view of the description of Patent Document 2, Co can exhibit an effect by coexisting with Ni. Therefore, according to the finding that the alloy composition of Patent Document 1 has low shear strength and an inappropriate fracture mode, it is inferred that addition of Ni is not preferable also in Patent Document 2.

Moreover, Patent Document 2 describes that when the Bi content is a predetermined amount or less, thermal shock resistance can be maintained. However, in Patent Document 2, since Bi dissolves in Sn to about 3%, the tensile strength of the solder alloy increases due to solid-solution strengthening of Sn, and the fracture mode becomes the joint interface.

Therefore, in view of the above findings, the present inventors have focused on an Sn-Ag-In-Sb solder alloy obtained by removing Ni, Co, and Bi from the elements to be added to Sn in Patent Documents 1 and 2. And, in order to improve the shear strength of the solder alloy and cause the fracture mode to be the bulk, the present inventors conducted detailed studies on the selection of additional additive elements and the Ag, In, and Sb contents.

First, in order to make the fracture mode appropriate, it is necessary to suppress the growth of the intermetallic compound at the joint interface in the solder alloy not containing Cu and Ni. The intermetallic compound grows by diffusion of Cu from the electrode to the solder alloy. Here, the intermetallic compound is mainly composed of a compound of Sn and Cu. And, when the intermetallic compound layer present at the interface between the solder alloy and the electrode is coarse, the fracture mode tends to be inappropriate.

Therefore, focusing on the fact that the interface is modified by containing Fe, the content of the additive element was studied in detail for the Sn-Ag-In-Sb-Fe solder alloy. As a result, it has been found that the shear strength can be improved and the fracture mode can be optimized only when the content of the additive element falls within a predetermined range. The present invention completed from these findings is as follows.

(0) A solder alloy consisting of, by mass%, Ag: 2.0 to 3.6%, In: 1.0 to 5.0%, Sb: 3.0 to 5.0%, Fe: 0.0010 to 0.0300%, and Co: 0.0000% or more and 0.0500% or less, with the balance being Sn.
(1) A solder alloy having an alloy composition consisting of, by mass%, Ag: 2.0 to 3.6%, In: 1.0 to 5.0%, Sb: 3.0 to 5.0%, Fe: 0.0010 to 0.0300%, and Co: 0% or more and 0.050% or less, with the balance being Sn.
(2) The alloy composition (solder alloy) according to (0) or (1) above, wherein, by mass%, the alloy composition further contains at least one of Zr, Ge, Ga, P, As, Pb, Zn, Mg, Cr, Ti, Mo, Pt, Pd, Au, Al, and Si: 0.100% or less in total.
(3) The alloy composition (solder alloy) according to any one of (0) to (2) above, wherein the alloy composition satisfies the following Relations (1) and (2): $0.36 ≦ Ag \times In \times Sb \times Fe ≦ 1.19$ (1) $47 ≦ \left(In\times Sb\right) / \left(Ag\times Fe\right) ≦ 319$ (2) wherein Ag, In, Sb, and Fe in the Relations (1) and (2) each represent the content in mass% thereof in the solder alloy.
(4) A solder paste having a solder powder consisting of the solder alloy according to any one of (0) to (2).
(5) A solder ball consisting of the solder alloy according to any one of (0) to (2) above.
(6) A solder preform consisting of the solder alloy according to any one of (0) to (2) above.
(7) A solder joint having the solder alloy according to any one of (0) to (2) above.
(8) A vehicle-mounted electronic circuit having the solder alloy according to any one of (0) to (2) above.
(9) An ECU electronic circuit having the solder alloy according to any one of (0) to (2) above.
(10) A vehicle-mounted electronic circuit device comprising the vehicle-mounted electronic circuit according to (8) above.
(11) An ECU electronic circuit device comprising the ECU electronic circuit according to (9) above.

### Brief Description of Drawings

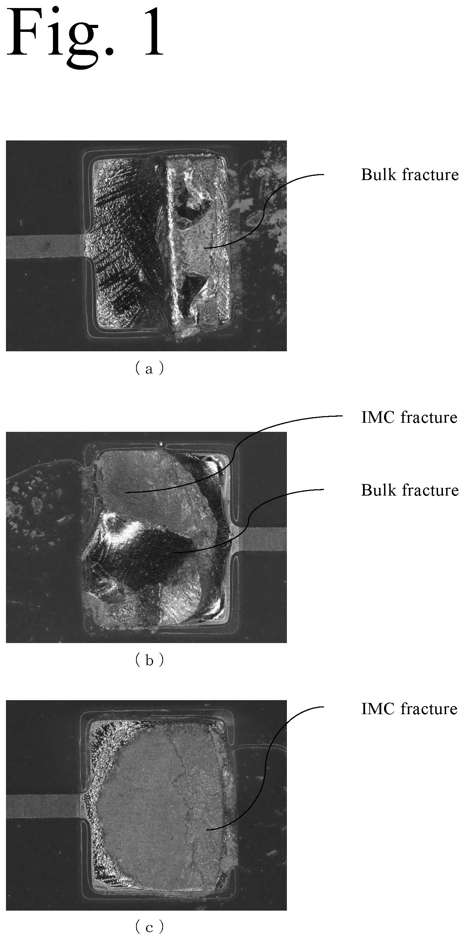

[FIG. 1] FIG. 1 shows an optical microscope photograph of a sample after the shear strength is measured, FIG. 1(a) shows Example 14, FIG. 1(b) shows Example 2, and FIG. 1(c) shows Comparative Example 3.

### Description of Embodiments

The present invention is described in more detail below. In this description, "%" relating to the solder alloy composition refers to "mass%" unless otherwise specified.

### 1. Solder Alloy

### (1) Ag: 2.0 to 3.6%

Ag contributes to improvement of shear strength, optimization of a fracture mode by precipitation of Ag₃Sn, reduction of a melting point. When the Ag content is less than 2.0%, the precipitation amount of the compound is low, and the shear strength decreases. In terms of the lower limit, the Ag content is 2.0% or more, preferably 2.5% or more, more preferably 2.7% or more, and further preferably 3.0% or more.

On the other hand, when the Ag content is more than 3.6%, since a large amount of Ag₃Sn is precipitated due to becoming hypereutectic and the bulk strength is excessively increased, the fracture mode becomes the joint interface. In addition, the shear strength decreases due to the fracture mode becoming the joint interface. In terms of the upper limit, the Ag content is 3.6% or less, preferably 3.5% or less, and more preferably 3.4% or less.

### (2) In: 1.0 to 5.0%

In contributes to improvement of shear strength, and optimization of a fracture mode. When the In content is less than 1.0%, wet-spreading is also insufficient due to decreased wettability, and the effect of solid solution strengthening is insufficient, so that the shear strength decreases and the fracture mode is inappropriate. In terms of the lower limit, the In content is 1.0% or more, preferably 1.5% or more, more preferably 2.0% or more, further preferably 2.5% or more, and particularly preferably 3.0% or more.

On the other hand, when the In content is more than 5.0%, a large amount of the compound is precipitated and the melting point increases. Moreover, the bulk strength increases, and there is a concern of fracture at the joint interface or in the component. In terms of the upper limit, the In content is 5.0% or less, preferably 4.5% or less, more preferably 4.0% or less, and further preferably 3.5% or less.

### (3) Sb: 3.0 to 5.0%

Sb contributes to improvement of shear strength, optimization of a fracture mode. When the Sb content is less than 3.0%, solid solution strengthening to Sn and precipitation strengthening of the Sn-Sb compound are not sufficient, and therefore the shear strength decreases. In terms of the lower limit, the Sb content is 3.0% or more, preferably 3.5% or more, more preferably 3.6% or more, further preferably 3.8% or more, particularly preferably 3.9% or more, and most preferably 4.0% or more.

On the other hand, when the Sb content is more than 5.0%, coarse SnSb compounds are formed, so that the shear strength decreases. Moreover, the wettability deteriorates and the fracture mode becomes the joint interface or component fracture, becoming inappropriate. In terms of the upper limit, the Sb content is 5.0% or less, preferably 4.8 or less, more preferably 4.6% or less, further preferably 4.5% or less, particularly preferably 4.3% or less, and most preferably 4.1% or less.

### (4) Fe: 0.0010 to 0.0300%

Fe contributes to improvement of shear strength, optimization of a fracture mode. When the Fe content is less than 0.0010%, the effect of interface strengthening by modification of the intermetallic compound layer formed at the interface is not sufficient, and therefore the shear strength decreases and the fracture mode becomes the joint interface, becoming inappropriate. In terms of the lower limit, the Fe content is 0.0010% or more, preferably 0.0050% or more, more preferably 0.0100% or more, further preferably 0.0150% or more, and particularly preferably 0.0200% or more.

On the other hand, when the Fe content is more than 0.0300%, a compound of Sn and Fe is precipitated, and the bulk strength is excessively improved, so that there is also a risk of fracture at the joint interface. In terms of the upper limit, the Fe content is 0.0300% or less, preferably 0.0270% or less, and more preferably 0.0250% or less.

### (5) Co: 0.0000% or more and 0.0500% or less

Co is an optional element that contributes to suppression of an increase in a melting point, improvement of shear strength, and optimization of a fracture mode. In the conventional solder alloy, it has been considered preferable not to contain Co from the viewpoint of improving the shear strength and optimizing the fracture mode. However, when Co is added, high shear strength is maintained and the fracture mode continues to be the bulk. In the Sn-Ag-In-Sb-based solder alloy, with respect to Co, it is considered that CoSn and the like are finely dispersed. However, the Sn alloy structure is not refined to the extent that it becomes sufficiently fine. In this alloy system, since the Sn alloy structure becomes fine by Fe, it is presumed that when the fine structure of CoSn and the like are dispersed, the entire alloy structure becomes further fine. Therefore, in the solder alloy according to the present invention, Co can exert a synergistic effect in the presence of Fe.

In addition, in the solder alloy according to the present invention, Co is an optional element, and therefore even when Co is not contained, high shear strength and optimization of the fracture mode can be maintained. In terms of the lower limit, the Co content is 0.0000% or more, preferably more than 0.0000%, more preferably 0.0010% or more, further preferably 0.0030% or more, particularly preferably 0.0060% or more, and most preferably 0.0080% or more.

On the other hand, when the Co content is more than 0.0500%, a compound of Sn and Co is precipitated and the bulk strength is extremely increased, causing the fracture mode to be the joint interface. In addition, the melting point greatly increases due to precipitation of a large amount of the compound, and wettability deteriorates, so that shear strength decreases. In terms of the upper limit, the Co content is 0.0500% or less, preferably 0.0300% or less, and more preferably 0.0100% or less.

### (6) Balance: Sn

The balance of the solder alloy according to the present invention is Sn. In addition to the above-described elements, unavoidable impurity may be contained. Even when unavoidable impurity is contained, it does not affect the above-described effects. It is to be noted that, in the present invention, when the Sn-Ag-In-Sb-Fe solder alloy contains Ni, the SnNi compound is precipitated. Since the SnNi compound precipitates using the intermetallic compound formed at the interface as a nucleus, the intermetallic compound layer formed at the interface becomes thick. As a result, the shear strength decreases. Therefore, in the present invention, it is preferable not to contain Ni. In addition, when Bi coexists with In, it forms a low-melting-point Sn-In-Bi phase. In view of creep deformation, the low-melting-point phase has such a low melting point that a room temperature environment constitutes a high temperature environment, and is therefore susceptible to creep deformation and the shear strength is reduced. Therefore, in the present invention, it is preferable not to contain Bi.

### (7) At least one of Zr, Ge, Ga, P, As, Pb, Zn, Mg, Cr, Ti, Mo, Pt, Pd, Au, Al, and Si: 0.100% or less in total

The solder alloy according to the present invention can contain at least one of Zr, Ge, Ga, P, As, Pb, Zn, Mg, Cr, Ti, Mo, Pt, Pd, Au, Al, and Si in the range of 0.100% or less in total as an optional element to the extent that the effect of the present invention is not impaired. Preferably, the total amount is 0.080% or less. In terms of the lower limit, the content may be 0.0001% or more, or may be 0.001% or more, although not particularly limited.

### (8) Relations (1) and (2):

$0.36 ≦ Ag \times In \times Sb \times Fe ≦ 1.19$ (1) $47 ≦ \left(In\times Sb\right) / \left(Ag\times Fe\right) ≦ 319$ (2) wherein Ag, In, Sb, and Fe in the Relations (1) and (2) each represent the content in mass% thereof in the solder alloy.

Relation (1) is a relation in which the balance of the additive elements of the solder alloy according to the present invention is taken into consideration. The solder alloy according to the present invention can exhibit a low melting point, a high shear strength, an appropriate fracture mode by a synergistic effect of each constituent element. Therefore, when the balance of all the constituent elements except Sn is further optimized, all the effects of the present invention can be further improved. In Relation (1), the Ag, In, and Sb contents are approximately 10 to 100 times the content of Fe. However, it is considered that their contributions to the solder alloy are almost the same level. Therefore, in order to further improve the low melting point, the high shear strength, and the appropriate fracture mode in the present invention at the same time with one composition, a balanced content is preferably required.

Relation (2) is a relation in which, among the additive elements, the balance in the In and Sb group, in which the shear strength is improved until component fracture occurs when the content is more than the upper limit, and the balance in the Ag and Fe group, which remains at the interface fracture, are considered, and the balance between both groups is further considered. When Relation (2) is satisfied, the fracture mode may be further appropriate depending on the alloy composition.

In terms of the lower limit of Relation (1), it is preferably 0.36 or more, more preferably 0.39 or more, still more preferably 0.42 or more, still further preferably 0.43 or more, particularly preferably 0.44 or more, and most preferably 0.52 or more, 0.53 or more, 0.60 or more, 0.656 or more, 0.66 or more, 0.70 or more, 0.75 or more, 0.78 or more, 0.79 or more, 0.84 or more, 0.87 or more, 0.88 or more. In terms of the upper limit of Relation (1), it is preferably 1.19 or less, more preferably 1.18 or less, still more preferably 1.09 or less, still further preferably 1.08 or less, particularly preferably 1.05 or less, and most preferably 1.02 or less, 0.91 or less, 0.92 or less, 0.90 or less.

In terms of the lower limit of Relation (2), it is preferably 47 or more, more preferably 51 or more, still more preferably 57 or more, still further preferably 68 or more, particularly preferably 69 or more, and most preferably 85 or more, 86 or more, 91 or more, 102 or more, 103 or more, 114 or more, 120 or more, 133 or more, 137 or more, 141 or more, 142 or more, 143 or more, 154 or more, or 160 or more. In terms of the upper limit of Relation (2), it is preferably 319 or less, more preferably 286 or less, still more preferably 285 or less, still further preferably 267 or less, particularly preferably 266 or less, and most preferably 257 or less, 240 or less, 229 or less, 228 or less, 213 or less, 206 or less, 205 or less, 200 or less, 192 or less, 183 or less, 182 or less, 171 or less.

In the calculation of Relations (1) and (2), numerical values themselves as indicated as the actual measured values of the alloy composition shown in the following Tables 1 to 3 are used. That is, in the calculation of Relations (1) and (2), all digits smaller than the number of significant digits in the actual measured values shown in the following Tables 1 to 3 are regarded as 0. For example, when the Fe content is "0.0250" mass% as an actual measured value, the Fe content used for the calculation of Relations (1) and (2) does not have a range of 0.02505 to 0.02514%, but is handled as "0.025000...". In Relation (1), the number is calculated to three decimal places, and the digit in the third decimal place is rounded off to obtain a number to two decimal places. In Relation (2), the number is calculated to the first decimal place, and the digit in the first decimal place is rounded off to obtain a number to the nearest whole number.

It is to be noted that, when Relations (1) and (2) are also calculated from the alloy compositions specifically disclosed in other documents, and the patent documents cited in the present specification, the same manner of calculation is applied.

As described above, in the alloy, all the constituent elements do not function individually, but all the constituent elements form one object as a whole, so that it is rare that all the excellent effects are simultaneously exerted only by one element. Therefore, as described above, in order to exhibit more excellent properties within the range of the optimum content of each constituent element, it is necessary to study the constituent elements as a whole. In the solder alloy according to the present invention, it is preferable to satisfy Relations (1) and (2) in order to achieve all of a low melting point, a high shear strength, an appropriate fracture mode by one composition and at a higher level.

It is to be noted that, in Examples described below, "Excellent" indicates that the example is particularly preferable in practical use as compared with "Good". Since "Good" is a more preferable result than the prior art, when other evaluation results are also excellent, they are within the scope of the present invention and handled as examples. Since "Poor" is an insufficient result in the present invention, it is outside the scope of the present invention, and is handled as a comparative example.

### 2. Solder Paste

A solder paste according to the present invention is a mixture of a solder powder consisting of the alloy composition described above and a flux. A flux to be used in the present invention is not particularly limited as long as soldering by an ordinary method is possible. Therefore, a flux appropriately blended with rosin, an organic acid, an activator, a thixotropic agent, as well as a solvent, all of which are commonly used, may be employed. Blending ratios of the metal powder component and the flux component in the present invention are preferably the metal powder component: 70 to 90 mass%, the flux component: 10 to 30 mass%, although not particularly limited.

### 3. Solder Ball

The solder alloy according to the present invention can be used as a solder ball. In the case of using the solder alloy according to the present invention as a solder ball, a solder ball can be manufactured using a dropping method which is a common method in the art. In addition, a solder joint can be manufactured by processing a solder ball using a common method in the art, such as mounting and joining one solder ball on one electrode coated with flux. A particle size of the solder ball is preferably 1 µm or more, more preferably 10 µm or more, still more preferably 20 µm or more, and particularly preferably 30 µm or more. In terms of the upper limit, the particle size of the solder ball is preferably 3000 µm or less, more preferably 1000 µm or less, still more preferably 800 µm or less, and particularly preferably 600 µm or less.

### 4. Solder Preform

The solder alloy according to the present invention can be used as a solder preform. Examples of the shape of the preform include a washer, a ring, a pellet, a disk, a ribbon, and a wire.

### 5. Solder Joint

A solder joint according to the present invention is preferably used to join at least two or more of members to be joined. The members to be joined are not particularly limited as long as they are electrically connected by using the solder alloy according to the present invention, and examples thereof include elements, boards, electronic components, printed circuit boards, insulated boards, heat sinks, lead frames, semiconductors using electrode terminals and the like, power modules, inverter products, and the like.

The joining method using the solder alloy according to the present invention may be performed according to a conventional method using, for example, a reflow method. The melting temperature of the solder alloy in the case of performing reflow soldering may be a temperature approximately 20°C higher than the liquidus-line temperature. In addition, when joining is performed using the solder alloy according to the present invention, the alloy structure can be further refined in consideration of the cooling rate during solidification. For example, the solder joint is cooled at a cooling rate of 2 to 3°C /s or more. The other joining conditions can be appropriately adjusted according to the alloy composition of the solder alloy.

### 6. Vehicle-Mounted Electronic Circuit, ECU Electronic Circuit, Vehicle-Mounted Electronic Circuit Device, ECU Electronic Circuit Device

As is apparent from the above description, the solder alloy according to the present invention has a suppressed increase in a melting point, and an appropriate fracture mode. Therefore, even when used for vehicles exposed to severe environments, that is, for vehicle-mounted devices, fracture of solder joints is suppressed without variation. Consequently, since the solder alloy has such particularly remarkable properties, it is found that the solder alloy according to the present invention is particularly suitable for soldering of an electronic circuit mounted on a vehicle.

As described above, the solder alloy according to the present invention is more specifically used for soldering of a vehicle-mounted electronic circuit or used for soldering of an ECU electronic circuit, and exhibits excellent effects.

The "electronic circuit" is a system that exhibits a target function as a whole through an electronic engineering combination of a plurality of electronic components, each having a function.

Examples of the electronic component constituting such an electronic circuit include a chip resistor, a multiple resistance component, QFP, QFN, a power transistor, a diode, a capacitor, etc. The electronic circuit incorporating these electronic components is provided on a board and constitutes an electronic circuit device.

In the present invention, a board constituting such an electronic circuit device, for example, a printed wiring board is not particularly limited. The material thereof is also not particularly limited, but a heat-resistant plastic board (for example, FR-4 having a high Tg and a low CTE) is exemplified. The printed wiring board is preferably a printed circuit board in which the Cu land surface is treated with an organic matter (OSP : Organic Surface Protection) such as amine or imidazole.

### 7. Other

As the solder alloy according to the present invention, by using a low α-ray material as a raw material, a low α-ray alloy can be produced. Such a low α-ray alloy can prevent a soft error when used for forming solder bumps around a memory.

### Examples

The present invention will be described based on the following examples; however, the present invention is not limited to the following examples.

In order to verify the effect of the present invention, solder alloys described in Tables 1 to 3 were used to evaluate (1) melting point, (2) shear strength, (3) fracture mode.

### (1) Melting Point

For the solder alloys shown in Tables 1 to 3, each temperature was determined from the DSC curve. The DSC curve was obtained with a DSC (model number: 6200) manufactured by Seiko Instruments Inc., by raising the temperature at 5°C/min in the atmosphere. The liquidus-line temperature was determined from the obtained DSC curve and taken as the melting point. When the melting point is 232°C or lower, reflow soldering can be performed at the same temperature as in the prior art. When the melting point is more than 232°C, conventional reflow soldering cannot be performed since the melting point is high.

### (2) Shear Strength

### (2-1) Fabrication of Samples

Solder alloys shown in Tables 1 to 3 were cast to prepare solder sheets (diameter: 1 mm, thickness: 0.15 mm). Using the reflow furnace (SNR-615: manufactured by SENJU METAL INDUSTRY CO., LTD.), a chip resistor was soldered to the Cu-OSP electrode of the FR-4 board. As the chip resistor, 3216CR (CR32-114JV: manufactured by HOKURIKU ELECTRIC INDUSTRY CO., LTD.) was used. The reflow profile was maintained at 220°C or more for 40 seconds, and the peak temperature was 245°C in a nitrogen atmosphere.

### (2-2) Evaluation of Shear Strength

The sample thus prepared was measured for shear strength using the shear tester (STR-1000: manufactured by RHESCA) at a shear rate of 6 mm/min. When the shear strength was 84.0N or more, it was determined as "Excellent". When the shear strength was 70.0N or more and less than 84.0N, it was determined as "Good". When the shear strength was less than 70.0N, it was determined as "Poor".

### (3) Fracture Mode

The sample evaluated in "(2) Shear Strength" above was observed for the fracture mode using the optical microscope (VHX-5000: manufactured by KEYENCE Corporation). When the sample was fractured in the bulk, it was determined as "Excellent". When the sample was fractured in the bulk and at intermetallic compound (IMC) in the joint interface, it was determined as "Good". When the sample was fractured at the intermetallic compound at the joint interface, it was determined as "Poor".

The evaluation results are shown in Tables 1 to 3.

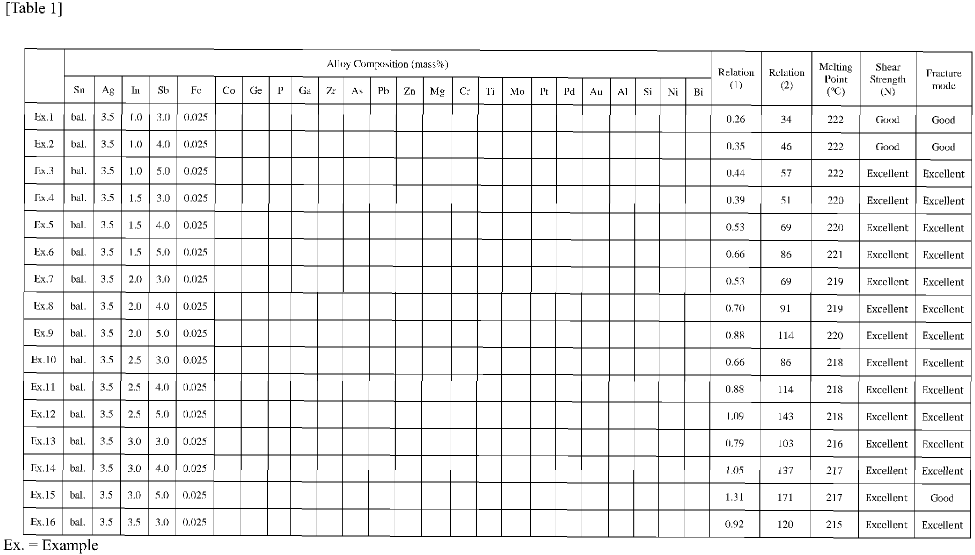

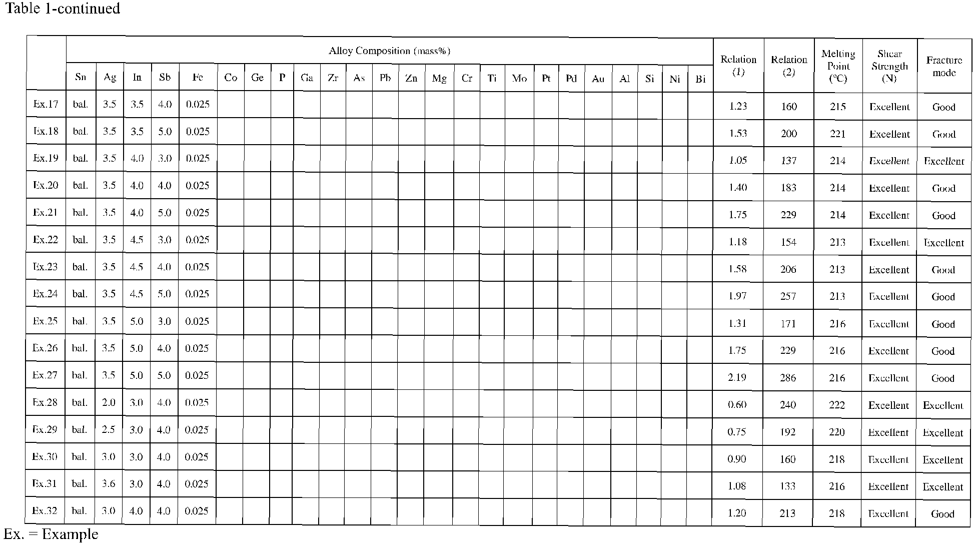

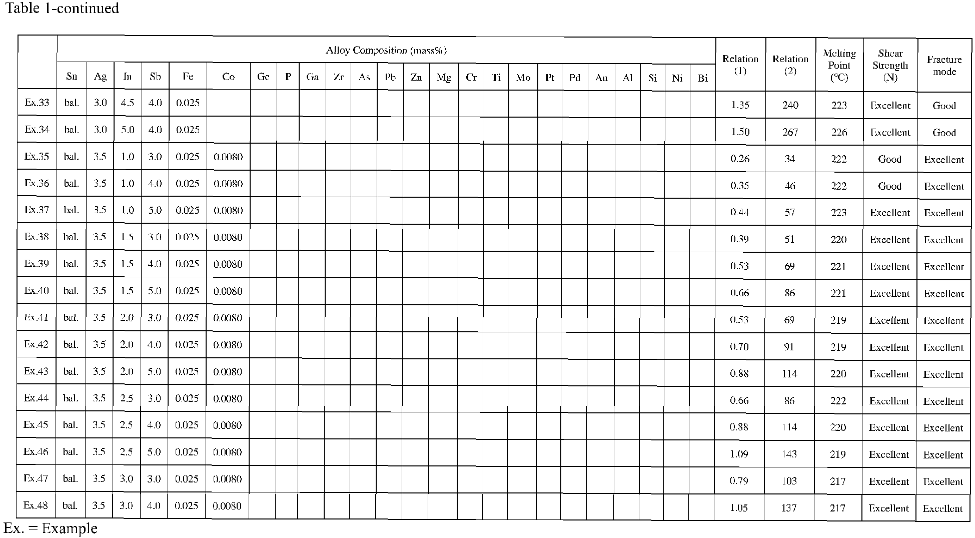

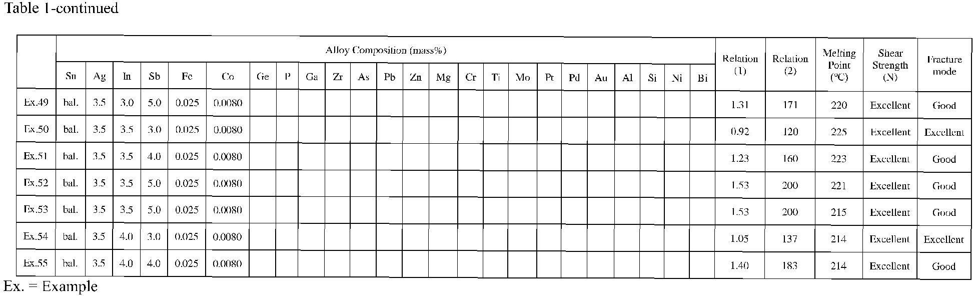

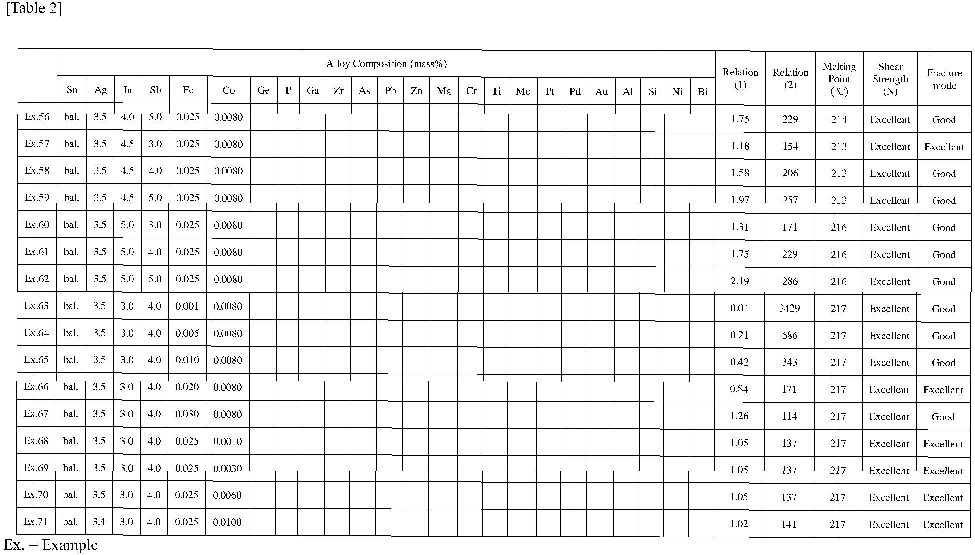

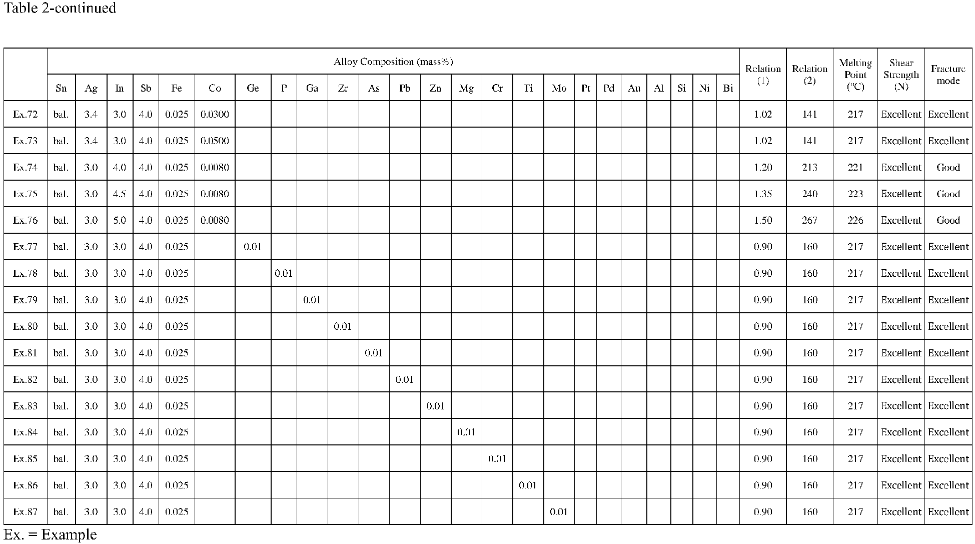

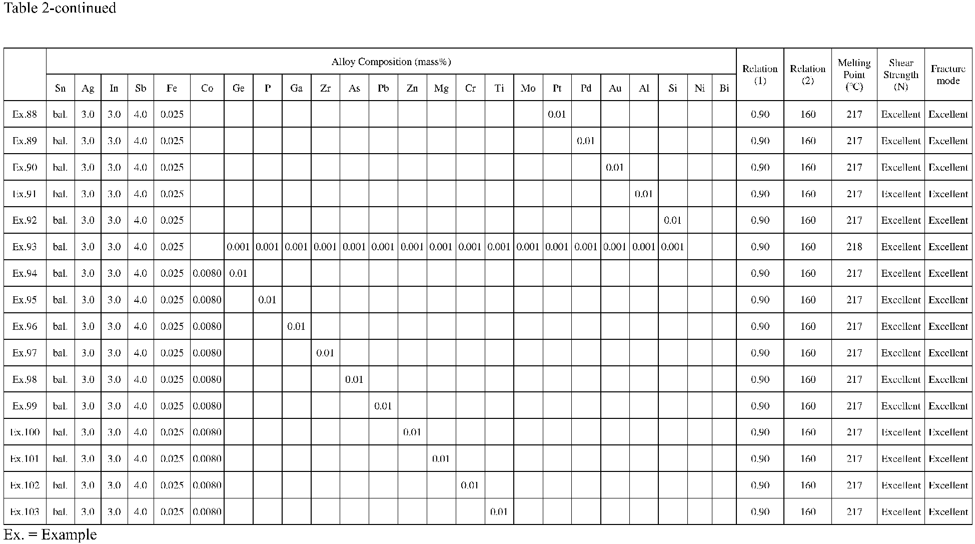

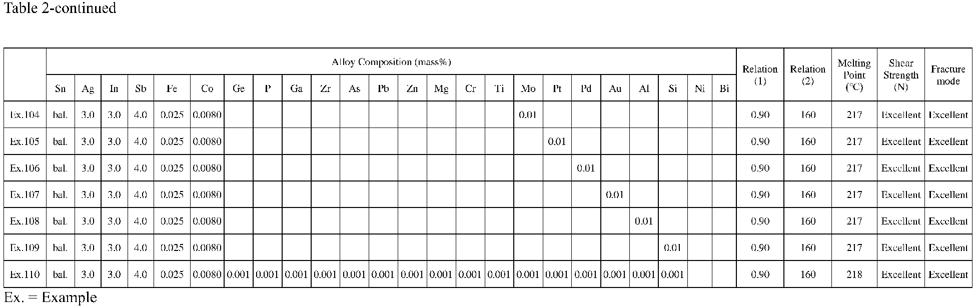

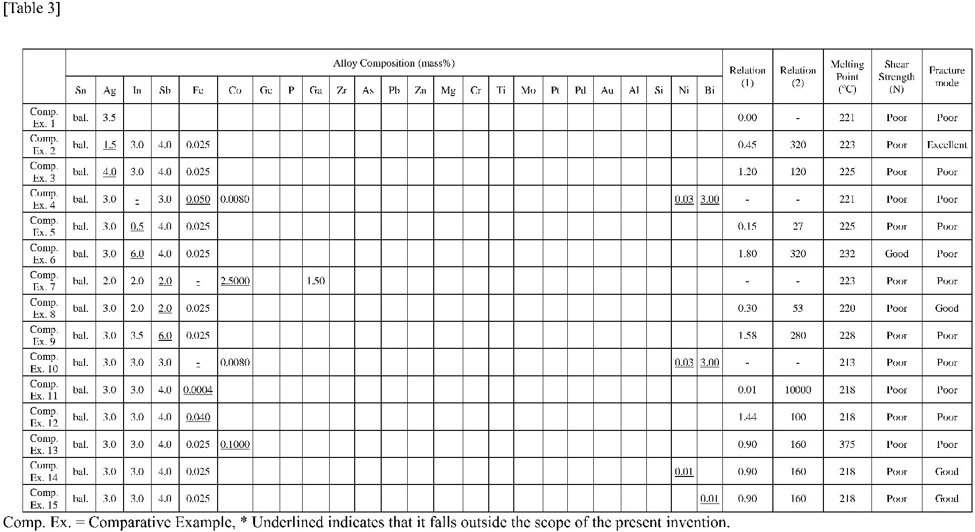

As shown in Table 1 and Table 2, in Examples 1 to 110, all the contents of the respective constituent elements were appropriate, and thus all evaluations were result in acceptable for practical use. In addition, it was found that Examples 3 to 14, 16, 19, 22, 28 to 31, 37 to 48, 50, 54, 57, 66, 68 to 73, and 77 to 110 satisfying Relations (1) and (2) exhibited extremely excellent results in all evaluations. Among the practically acceptable results, the excellent results showed significant differences.

On the other hand, as shown in Table 3, since Comparative Example 1 did not contain In, Sb, and Fe, the shear strength was poor, and the fracture mode was inappropriate. In Comparative Example 2, the Ag content was low, and thus the shear strength was poor. In Comparative Example 3, the Ag content was high, and thus the shear strength was poor, and the fracture mode was inappropriate.

In Comparative Example 4, the In was not contained, and in Comparative Example 5, the In content was low, and thus the shear strength was poor, and the fracture mode was inappropriate. In Comparative Example 6, the In content was high, and thus the fracture mode was inappropriate.

In Comparative Example 7, the Sb content was low and Fe was not included, and thus the shear strength was poor and the fracture mode was inappropriate. In Comparative Example 8, the Sb content was low, and thus the shear strength was poor. In Comparative Example 9, the Sb content was high, and thus the shear strength was poor and the fracture mode was inappropriate.

In Comparative Examples 10 to 12, the Fe content was inappropriate, and thus the shear strength was poor and the fracture mode was inappropriate. In Comparative Example 13, the Co content was high, and thus the melting point was significantly increased, the shear strength was poor, and the fracture mode was inappropriate. In Comparative Example 14 and Comparative Example 15 contained Ni or Bi, respectively, and thus the shear strength was poor.

FIG. 1 shows an optical microscope photograph of a sample after the shear strength is measured. FIG. 1(a) shows Example 14, FIG. 1(b) shows Example 2, and FIG. 1(c) shows Comparative Example 3. As is apparent from FIG. 1, in Example 14, it was found that the solder joint was fractured due to bulk fracture. In addition, in Example 2, it was found that fracture occurred in the bulk and at the intermetallic compound at the joint interface. On the other hand, in Comparative Example 3, it was found that the solder joint fractured due to the fracture occurring at the intermetallic compound at the joint interface. Therefore, in Example 14, it was found that the fracture mode was appropriate. This result was similar in other Examples.

### Industrial Applicability

The solder according to the present invention can be used in a vehicle-mounted electronic circuit such as an ECU which is an electronic circuit for controlling a vehicle by a computer in order to improve fuel efficiency. Meanwhile, for example, the solder according to the present invention can also be used in a consumer electronic device such as a personal computer and exhibits an excellent effect.

## Claims

1. A solder alloy having an alloy composition consisting of, by mass%,
Ag: 2.0 to 3.6%,
In: 1.0 to 5.0%,
Sb: 3.0 to 5.0%,
Fe: 0.0010 to 0.0300%, and
Co: 0.0000% or more and 0.0500% or less, with the balance being Sn.

2. The solder alloy according to claim 1,
wherein, by mass%,
the alloy composition further contains at least one of Zr, Ge, Ga, P, As, Pb, Zn, Mg, Cr, Ti, Mo, Pt, Pd, Au, Al, and Si: 0.100% or less in total.

3. The solder alloy according to claim 1 or 2,
wherein the alloy composition satisfies the following Relations (1) and (2): $0.36 ≦ Ag \times In \times Sb \times Fe ≦ 1.19$ (1) $47 ≦ \left(In\times Sb\right) / \left(Ag\times Fe\right) ≦ 319$ (2)
wherein Ag, In, Sb, and Fe in the Relations (1) and (2) each represent the content in mass% thereof in the solder alloy.

4. A solder paste having a solder powder consisting of the solder alloy according to claim 1 or 2.

5. A solder ball consisting of the solder alloy according to claim 1 or 2.

6. A solder preform consisting of the solder alloy according to claim 1 or 2.

7. A solder joint having the solder alloy according to claim 1 or 2.

8. A vehicle-mounted electronic circuit having the solder alloy according to claim 1 or 2.

9. An ECU electronic circuit having the solder alloy according to claim 1 or 2.

10. A vehicle-mounted electronic circuit device comprising the vehicle-mounted electronic circuit according to claim 8.

11. An ECU electronic circuit device comprising the ECU electronic circuit according to claim 9.
